# EUROPEAN PATENT SPECIFICATION

(11) **EP 1 618 985 B1**
(45) Date of publication and mention of the grant of the patent: **12.01.2011**
(21) Application number: 04380154.7
(22) Date of filing: 20.07.2004
(51) Int. Cl.: B23K 26/14, B23K 26/40, B28D 1/22

(54) **Method for cutting ceramic pieces or elements**
Schneidverfahren für Keramik
Procédé de découpe de céramiques

(43) Date of publication of application: 25.01.2006
(73) Proprietor: Universidad de Vigo, 36200 Vigo (ES)
(72) Inventor: Soto Costas, Ramon Francisco Universidad de Vigo, Lagoas Marcosende 9 36280 Pontevedra (ES); Jesus Perez-Martinez Y Perez-Amor, Mariano, Lagoas Marcosende 9, 36280 Pontevedra (ES); Quintero Martinez, Felix Universidad de Vigo, Lagoas Marcosende 9 36280 Pontevedra (ES); Pou Saracho, Juan Maria Universidad de Vigo, Lagoas Marosende 9 36280 Pontevedra (ES); Lusquinos Rodriguez, Fernando Universidad de Vigo, Lagoas Marcosende 9 36280 Pontevedra (ES); Boutinguiza Larosi, Mohamed Universidad de Vigo, Lagoas Marcosende 9 36280 Ponteverda (ES)
(74) Representative: ABG Patentes, S.L.

(56) References cited:
- WO-A-93/16838
- FR-A- 2 589 780
- JP-A- 10 249 572

## Description

The present invention refers to a method for cutting ceramic pieces or elements by means of the application of laser radiation.

By means of the method object of the invention, it is possible to cut ceramic elements such as tiles, floor tiles, stoneware pieces, porcelain stoneware, traditional ceramics, refractory ceramics, advanced ceramics, etc., with the desired shapes without the production of breaks therein and allowing for the cutting of ceramic elements of a different composition or shape without needing to change the equipment or tool.

### BACKGROUND OF THE INVENTION

For thousands of years, clay has been used as the fundamental raw material for manufacturing bricks, tiles, pottery pieces, etc.... The different types of ceramics currently encompass a wide range of applications: they serve as abrasives and cutting tools, as thermal insulators, as electrical insulators, as biocompatible materials, construction elements, catalysts, radioactive waste immobilizers, etc.... This variety of applications converts ceramics into materials commonly used in multiple fields of our life and, in turn, into indispensable materials in modern industry.

In all their applications, ceramic materials are valued for their excellent properties, mainly their capacity to resist heat and etching.

For the past decades, a special type of ceramic materials has been developed called technical ceramics or advanced ceramics, the properties of which make them specially indicated for those applications in which working conditions are more demanding (*see*, *for example, the work edited by* E. J. Brook, "Ceramics Materials Research". Elsevier Science Publishers B.V., Amsterdam, (1988*)*). This type of ceramics has the following properties.
- A thermal stability difficult to surpass.
- Resistance to wear that is considerably greater than that of metals.
- Excellent insulating power against the circulation of electrical current.
- High chemical stability.
- High resistance to corrosion.
- High degree of hardness and stiffness.

On the contrary, the main drawback of ceramics is their brittleness. The particular atomic structure of ceramic materials, which provides them with high chemical and thermal stabilities, also grants them great brittleness. Ceramic materials work very well under compression, but when they are subjected to tensile stresses or shear stresses, they have problems with the occurrence of cracks and breakage (*see the work edited by* M. Swain, "Structure and properties of ceramics". Materials Science and Technology. VCH Weinheim, (1991*)*).

One field in which advanced ceramics have implied great progress by opening new possibilities is in that of high temperatures. In those industrial systems in which it is necessary to support certain stresses at very high temperatures, advanced ceramics without a doubt imply the best currently available solution. The ceramics most used for this type of applications are alumina, zirconia, cordierite, mullite, silicon carbide or silicon nitride, among others.

One of the various problems in the entire manufacturing process of ceramic pieces for applications at high temperatures is that of the machining thereof once fired. As previously discussed, a common property of these advanced ceramics is their high degree of hardness and their brittleness. The combination of these two properties makes the ceramic element machining process very difficult once they are subjected to the firing process.

Machining of ceramic pieces is traditionally carried out by mechanical means using diamond tools (diamond bits, saws, mills). This type of machining has the following drawbacks:
- The high cost of diamond tools.
- The ceramic part is subjected to stress during the machining process. This may cause the occurrence of cracks reducing the useful life of the part, or even causing the breakage thereof.
- Necessity to cool.
- Slowness of the process.
- Generation of high noise levels.
- wear of the tools.
- Release of dust.

In reference to the processing of materials with laser, this is a field of application of the laser which began a few decades ago and which has been very focused on the processing of metal materials (*see the following works by way of example:* M. Bass, "Laser materials processing", North-Holland, Amsterdam (1983*);* O.D.D. Soares and M. Peréz-Amor, "Applied laser tooling", Martinus Nijhoff, Dordrecht (1987*);* W.M. Steen, "Laser material processing", Springer-Verlag, London (1991*)*).

Previous work on the laser cutting of ceramic tiles as described by FR-A-2589780 has been made by using coaxial conical sonic nozzles, therefore the presence of dross, resolidified material on the walls of the cut, and a heat affected zone in the cut not be avoided by this method.

### DESCRIPTION OF THE INVENTION

The present invention provides the method for cutting pieces or elements manufactured with ceramic materials according to claim 1.

One of the advantages of the present patent is the possibility of carrying out treatments on ceramic pieces which are impossible to carry out by mechanical methods. The cutting of elements of any shape or geometry is thus possible, being able to carry out blind or intermittent cuts.

Another one of the advantages of the invention object of the present patent is the fact that the processing is carried out without making contact with the piece, thereby in no case being subjected to mechanical stresses during the laser treatment process, something which is inherent to mechanical processes. Furthermore, as no contact whatsoever is made between the piece and the tool, the latter undergoes neither wear nor corrosion, it therefore being unnecessary to sharpen it or replace it.

On the other hand, unlike the standard methods, the laser beam can be easily moved, making this cutting method have very broad possibilities of mechanization and integration in flexible manufacturing systems.

From an environmental point of view, the invention object of the present patent has the following advantages:
- Elimination of noise.
- Decrease of vibrations.
- Reduction of dust released into the environment.
- Reduction of cooling liquids.

Furthermore, from an economic point of view, the following advantages can be pointed out:
- Productivity increase.
- Improvement of the quality of the finished product, which can be assured within very narrow margins.
- Better use of the materials given the reduction of the wastes pertaining to machining.

The method for cutting ceramic pieces or elements by means of laser object of the present invention consists of subjecting said element or piece to the combined action of laser radiation and a gas stream working under supersonic conditions. The cutting process will preferably be carried out once the ceramic piece or element is fired, although it can also be carried out with the raw piece or element, i.e. prior to firing.

The main function of the assisting gas in laser cutting is the transfer of its kinetic momentum to the melted material in order to expel it from the piece and form the cutting groove. The efficiency with which the gas carries out this function is greatly influenced by the aerodynamic conditions existing in the acting stream and in the flow inside the cutting groove.

Standard laser cutting heads mainly consist of a cylindrical assembly enveloping the collimated beam and a converging lens which focuses it. Immediately after the lens, the pressurized gas is introduced in a convergent conduit of an approximately conical profile. The outlet is generally of a circular section, and the laser beam and gas stream emerge through this opening, such that their propagation directions are coaxial and perpendicular to the piece to be cut. Standard laser cutting systems thus have a convergent nozzle to carry out the injection of the assisting gas on the cutting face, which has a series of limitations which will be discussed below.

One of the main problems posed by ceramic elements in laser cutting is that the liquid which they form when they melt is very viscous, which complicates its expulsion from the melting face to produce the grooving of the cut. When the melted material flows with difficulties, it is necessary to increase the speed of the gas to obtain a more energetic stream and to thus increase its entrainment capacity. However, by using a convergent nozzle, if the intention is to increase the kinetic energy of the gas stream by increasing the supply pressure, what is obtained is a flow with an invariable outlet rate but with an increasing pressure, this means that the stream will emerge in an underexpanded way. A range of expansion waves is formed at its outlet from the convergent nozzle which comes from the edges of the outlet section causing the divergence of the gas stream. It can be observed that this divergence is more notable the larger the degree of underexpansion is. As a result of this process, the pressure of the stream decreases until becoming equal to the ambient pressure adjacent to the border formed between the stream and the stationary gas surrounding it occupying the nozzle delivery site. However, due to the inertia of the fluid, after undergoing that axial and radial expansion, it expands excessively until a depression is produced in one region around the axis of the stream while at the same time it reaches its maximum cross section. Then the expansion waves are reflected on the border, being transformed into oblique compression waves; the fluid is compressed when traversing them to off set the overexpansion, such that its axial speed decreases and its radial component changes direction, causing the convergence of the stream. This process causes a degradation of the energy available in the assisting gas stream. If the degree of underexpansion is high enough, a normal shock wave abruptly compressing the flow with an energy loss will be formed in the area in which the oblique compression waves intersect.

This class of flows in which regions of supersonic speed and subsonic regions are combined are usually called transonic. The distribution of the stagnation pressure in them is not uniform, it undergoes heavy variations and decreases the material expulsion capacity.

On the other hand, cutting tests have been carried out in which it is observed that when increasing the pressure of the nozzle to increase the cutting rate, an improvement occurs only until reaching a maximum, after which consecutive increases of the pressure cause a decrease in the cutting rate. This fact can be explained by the presence of the normal shock wave in the previously mentioned stream. The intensity of this normal shock wave has a crucial effect on the aerodynamic features of the gas stream in the cutting face. The normal shock wave causes an irreversible compression of the flow, causing a loss of the total pressure and gas stream speed in a proportion that depends on the intensity of the shock wave itself. The increase of the nozzle pressure causes a reinforcement of the normal shock wave, which implies a degradation of the kinetic momentum of the gas stream in the cutting groove and, accordingly, decreases the capacity thereof to expel the melted material. On the other hand, said shock wave implies an abrupt increase of the pressure and of the density of the fluid and, therefore, of its refraction index, such that the shock wave behaves like a lens which defocuses the laser beam and decreases its efficiency for generating an optimal cut.

On the other hand, it has been shown that the distance between the gas injection nozzle and the piece to be cut is a parameter of the process which has an enormous effect on the intensity of the normal shock wave and, therefore, on the efficacy of the assisting gas to entrain the melted material. Therefore it is necessary to maintain strict control of this process parameter which barely allows for a range of variation of about 1 mm. This implies a limitation of the standard cutting heads, as it is not possible to vary this distance to modify other process parameters, such as the position of the focus of the laser beam with regard to the piece for example, without altering the compromise between both effects.

Another one of the aerodynamic problems of the assisting gas in laser cutting is the blockage the stream from a nozzle undergoes when the intention is to introduce it into the cutting groove to expel the melted material found inside. This phenomenon is aggravated in the underexpanded streams which, with the divergence product of its radial expansion, increase its cross section.

Furthermore, this type of streams show a clear instability inside the cut with the presence of turbulences which occur before the release of the boundary layer of assisting gas adhered to the walls of the cut. The release of the boundary layer inside the cutting groove reduces the entrainment capacity of the material melted from the wall containing the fluid. The result is a profile of an irregular striated section, with the presence of recesses and of resolidified material, i.e. with a limited cut quality.

Unlike the standard laser cutting methods, in the method for cutting ceramic pieces or elements by means of laser object of the present patent, the assisting gas is injected in the cutting area by means of a convergent-divergent nozzle (also known as a De Laval nozzle). It is thus possible to achieve supersonic streams with a high kinetic energy and without the presence of the shock wave patterns or the wavy nature of the profile, both pertaining to the underexpanded streams from the convergent tubes when they work at high pressures. It is thus possible to obtain a perfectly expanded supersonic stream, thus preventing the formation of expansion or compression waves, in the same manner in which the radial divergence of the stream at the outlet is prevented, emerging with a cylindrical profile of parallel generators. The result is an improvement in the quality of the cut, the release of the boundary layer being eliminated, the depositing of melted material on the wall of the cut being prevented. All these features are not possible with the method disclosed by FR-A-2589780, because the use of a conical convergent sonic nozzle to inject the assist gas into the interaction zone of the laser to the high viscous molten ceramic is highly inefficient to extract the molten ceramic from the cutting groove. Therefore, resolidified material, castoff material, dross and a large thermally affected area will be obteained.

In addition to increasing the quality of the cut and the performance of the process, the increase of the melted material expulsion capacity by the gas stream and the absence of adherences on the cut edges have another very important effect on the cut piece. Since an increase of the material expelled from the melting face occurs, the thermally affected area decreases. This results in a decrease of the residual thermal stresses and in the disappearance of the risk of microcrack formation, which implies a great advantage in comparison to the results obtained with the standard laser cutting methods.

Another one of the advantages of the method for cutting ceramic pieces or elements object of the invention is the capacity to carry out an adjustment of the focal distance of the laser beam and of the distance between the piece and the nozzle. In other words: it is possible to focus the laser beam on the surface of the piece and move the assisting gas injector nozzle, maintaining the laser beam focused. This is impossible to do by means of standard laser cutting heads. A series of possibilities for the machining of pieces of different shapes and geometries is thus opened.

### DESCRIPTION OF THE DRAWINGS

To complement the description being made and for the purpose of helping to better understand the features of the invention, according to a preferred practical embodiment example thereof, a single sheet of drawings is attached as an integral part of said description, in which, with an illustrative and non-limiting character, a ceramic piece undergoing the effects generated by the cutting system corresponding to the method of the invention, has been schematically shown in perspective view.

### PREFERRED EMBODIMENT OF THE INVENTION

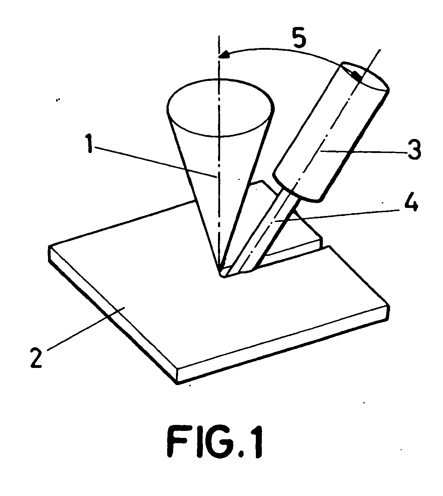

The cutting of ceramic pieces or elements by means of laser object of the invention is carried out in a suitable system, an example of which is shown in Figure 1. This method basically consists of the following: the ceramic piece or element (2) to be cut is situated on a support adjusted to its dimensions in a movable system. Said system can consist of a robot of any type, of a coordinate table of any type, or of a combination of both systems. This system will be connected to an automatic control system of the position of the piece, which, being of common use in industrial equipments, is not shown in the figure. The laser beam (1) is conducted by means of a suitable beam guiding system (which can be either a system of mirrors or optical fiber, according to the type of laser source used) towards the ceramic piece or element (2). To carry out the cutting of the ceramic pieces or elements, the joint action of the laser beam (1) and of a gas stream (4) working under supersonic conditions is needed. This gas stream (4) is provided to the area of interaction between the laser beam (1) and the ceramic piece or element (2) by means of a supersonic nozzle (3). The assisting gas stream is directed to the cutting area forming an angle of inclination with regard to the axis (5) of the laser of between 25 and 50°. Said gas stream (4) is a short distance behind the laser beam (between 1 and 5 mm) in order to obtain a better removal of the melted material.

To carry out two- and three-dimensional cuts, the supersonic nozzle (3) must be connected to the automatic control system of the position of the piece (not shown in the figure due to being of industrial use) in such a manner that the nozzle rotates synchronously with the movement of the movable system, while at the same time maintaining the angle of inclination fixed with regard to the axis (5) of the laser.

The laser radiation can come from a laser equipment of any wavelength, such as a CO₂, CO, N₂, Nd:YAG, Er:YAG, Nd:glass, ruby, HeNe, HeCd, HeHg, Cu, I, Ar, Kr, diode, chemical, excimer, alexandrite, emerald or dye laser. In any case, the best results have been obtained using CO₂ or Nd:YAG lasers. The power necessary for this type of lasers can be between 50 and 3000 W, the best results having been obtained when working with a power between 300 and 1000 W.

The laser beam (1) is focused by means of a lens (not shown in the figure). This lens will be carried out in such a manner and in a material such that it allows for the transmission of the energy of the laser beam (1). This lens will have a focal length between 100 and 300 mm.

The assisting gas injected through the supersonic nozzle can be an inert gas (Ar, He, Ne, N₂), or an oxidizing gas (O₂, CO₂, compressed air) .

A practical example of cutting of ceramic elements by means of laser is the following: alumina mullite plates of 4 mm thick are cut by means of an Nd:YAG laser (λ= 1.06 µm) working in a pulsed mode at a frequency of 120 Hz, with a pulse width of 1 ms, with argon gas at a pressure of 8x10⁵ Pa and with a power of 500 W. High-quality cuts were obtained under these conditions at a rate of 5 mm/s.

Having sufficiently described the nature of the present invention as well as a manner of carrying it to practice, all that remains to add is that it is possible to introduce changes in shape, materials and arrangement in the assembly thereof and parts forming it as long as these alterations do not depart from the scope of the claims.

## Claims

1. A method for cutting ceramic pieces or elements comprising the following operative phases:
a) positioning of the ceramic piece or element (2) to be cut on a support adjusted to its dimensions, in a movable system connected to any type of control equipment of the position of the piece;
b) irradiation of the ceramic piece or element to be cut by means of a laser beam (1) and a simultaneous injection of a gas stream (4) into the cutting area;
c) relative movement between the ceramic piece or element (2) and the laser beam (1); and
d) removal of the melted material such that the wall of the cut is clean of adhesions, castoff melted material and with a minimum thermally affected area;
**characterized in that**
said gas stream (4) is a supersonic gas stream (4) obtained by means of a convergent-divergent supersonic nozzle (3) and **in that** the supersonic gas stream (4) forms an angle (5) with regard to the axis of the laser beam (1) wherein the laser equipment and the supersonic nozzle (3) have the capacity to carry out an adjusment of the focal distance of the laser beam (1) and of the distance between the piece (2) and the nozzle (3), in such a manner that it is possible to focus the laser beam (1) on the surface of the piece (2) and move the assisting gas injector nozzle (3), maintaining the laser beam (1) focused.

2. A method according to claim 1, wherein the supersonic gas stream (4) is directed to the cutting area forming an angle of inclination (5) with regard to the axis of the laser (1) of between 25 and 50°.

3. A method according to claims 1 and 2, wherein the incidence of the supersonic gas stream (4) on the cutting area is a short distance behind the laser beam (1), preferably between 1 and 5 mm.

4. A method according to claims 1 to 3, wherein the power supplied by the laser beam (1) is comprised between 50 and 3000 W.

5. A method according to claim 4, wherein the power supplied by the laser beam (1) is comprised between 300 and 1000 W.

6. A method according to claims 1 to 5, wherein the supersonic gas stream (4) is an inert or an oxidizing gas.

7. A method according to claim 6, wherein said inert gas is selected from the group consisting of Ar, He, Ne and N₂.

8. A method according to claim 6, wherein said oxidizing gas is selected from the group consisting of O₂, CO₂ and compressed air.

9. A method according to any of claims 1 to 8, wherein the movable system connected to any type of control equipment of the position of the ceramic piece or element (2) consists of a robot of any type, of a coordinate table of any type, or of a combination of both systems.

10. A method according to claims 1 to 9, wherein the laser is a CO₂ or a Nd:YAG laser.

## Patentansprüche

1. Verfahren zum Schneiden keramischer Teile oder Elemente, das die folgenden Arbeitsphasen umfasst:
a) Positionieren des zu schneidenden keramischen Teils oder Elements (2) auf einem Träger, dessen Abmessungen entsprechend eingestellt sind, in einem beweglichen System, das mit irgendeiner Art von Gerät zur Steuerung der Position des Teils verbunden ist;
b) Bestrahlen des zu schneidenden keramischen Teils oder Elements mittels eines Laserstrahls (1) und einer gleichzeitigen Einleitung eines Gasstroms (4) in den Schneidebereich;
c) relative Bewegung zwischen dem keramischen Teil oder Element (2) und dem Laserstrahl (1); und
d) Entfernen des geschmolzenen Materials, so dass die Wand des Schnitts frei von anhaftendem Material und abgesprengtem geschmolzenen Material ist und der thermisch beeinflusste Bereich minimal ist;
**dadurch gekennzeichnet, dass** der Gasstrom (4) ein Überschallgasstrom (4) ist, der mittels einer konvergent-divergenten Überschalldüse (3) erhalten wird, und dass der Überschallgasstrom (4) einen Winkel (5) mit der Achse des Laserstrahls (1) bildet, wobei das Lasergerät und die Überschalldüse (3) die Fähigkeit haben, eine Justierung der Brennweite des Laserstrahls (1) und des Abstands zwischen dem Teil (2) und der Düse (3) vorzunehmen, so dass es möglich ist, den Laserstrahl (1) auf die Oberfläche des Teils (2) zu fokussieren und die unterstützende Gaseinleitungsdüse (3) zu bewegen, wobei der Laserstrahl (1) fokussiert gehalten wird.

2. Verfahren gemäß Anspruch 1, wobei der Überschallgasstrom (4) so auf den Schneidebereich gerichtet ist, dass er einen Neigungswinkel (5) mit der Achse des Laserstrahls (1) zwischen 25 und 50° bildet.

3. Verfahren gemäß Anspruch 1 und 2, wobei das Auftreffen des Überschallgasstroms (4) auf den Schneidebereich in einem kurzen Abstand, vorzugsweise zwischen 1 und 5 mm, hinter dem Laserstrahl (1) erfolgt.

4. Verfahren gemäß Anspruch 1 bis 3, wobei die vom Laserstrahl (1) zugeführte Leistung zwischen 50 und 3000 W liegt.

5. Verfahren gemäß Anspruch 4, wobei die vom Laserstrahl (1) zugeführte Leistung zwischen 300 und 1000 W liegt.

6. Verfahren gemäß Anspruch 1 bis 5, wobei es sich bei dem Überschallgasstrom (4) um ein Inertgas oder ein oxidierendes Gas handelt.

7. Verfahren gemäß Anspruch 6, wobei das Inertgas aus der Gruppe ausgewählt ist, die aus Ar, He, Ne und N₂ besteht.

8. Verfahren gemäß Anspruch 6, wobei das oxidierende Gas aus der Gruppe ausgewählt ist, die aus O₂, CO₂ und Druckluft besteht.

9. Verfahren gemäß einem der Ansprüche 1 bis 8, wobei das bewegliche System, das mit irgendeiner Art von Gerät zur Steuerung der Position des keramischen Teils oder Elements (2) verbunden ist, aus irgendeiner Art von Roboter, aus irgendeiner Art von Koordinatentisch oder aus einer Kombination beider Systeme besteht.

10. Verfahren gemäß Anspruch 1 bis 9, wobei der Laser ein CO₂- oder Nd:YAG-Laser ist.

## Revendications

1. Procédé pour découper des pièces ou des éléments en céramique, comprenant les phases opératoires suivantes :
a) positionnement de la pièce ou de l'élément en céramique (2) à découper sur un support réglé à ses dimensions, dans un système mobile relié à un type quelconque d'équipement de commande de la position de la pièce,
b) irradiation de la pièce ou de l'élément en céramique à découper au moyen d'un faisceau laser (1) et injection simultanée d'un flux de gaz (4) dans la zone de coupe,
c) déplacement relatif entre la pièce ou l'élément en céramique (2) et le faisceau laser (1), et
d) retrait de la matière fondue de telle sorte que la paroi de la coupe est dépourvue d'adhérences, de matière fondue de coulée et avec une zone thermiquement affectée minimale,
**caractérisé en ce que**
ledit flux de gaz (4) est un flux de gaz supersonique (4) obtenu au moyen d'une tuyère supersonique convergente-divergente (3) et **en ce que** le flux de gaz supersonique (4) forme un angle (5) par rapport à l'axe du faisceau laser (1), dans lequel l'équipement laser et la tuyère supersonique (3) ont la capacité d'effectuer un réglage de la distance focale du faisceau laser (1) et de la distance entre la pièce (2) et la tuyère (3), de manière à ce qu'il soit possible de focaliser le faisceau laser (1) sur la surface de la pièce (2) et de déplacer la tuyère auxiliaire d'injection de gaz (3), en maintenant le faisceau laser (1) focalisé.

2. Procédé selon la revendication 1, dans lequel le flux de gaz supersonique (4) est dirigé vers la zone de coupe en formant un angle d'inclinaison (5) par rapport à l'axe du laser (1) entre 25 et 50 °.

3. Procédé selon les revendications 1 et 2, dans lequel l'incidence du flux de gaz supersonique (4) sur la zone de coupe est une distance courte derrière le faisceau laser (1), de préférence entre 1 et 5 mm.

4. Procédé selon les revendications 1 à 3, dans lequel la puissance délivrée par le faisceau laser (1) est comprise entre 50 et 3 000 W.

5. Procédé selon la revendication 4, dans lequel la puissance délivrée par le faisceau laser (1) est comprise entre 300 et 1 000 W.

6. Procédé selon les revendications 1 à 5, dans lequel le flux de gaz supersonique (4) est un gaz inerte ou un gaz oxydant.

7. Procédé selon la revendication 6, dans lequel ledit gaz inerte est choisi parmi le groupe constitué de Ar, He, Ne et N₂.

8. Procédé selon la revendication 6, dans lequel ledit gaz oxydant est choisi parmi le groupe constitué de O₂, CO₂ et d'air comprimé.

9. Procédé selon l'une quelconque des revendications 1 à 8, dans lequel le système mobile relié à un type quelconque d'équipement de commande de la position de la pièce ou de l'élément en céramique (2) est constitué d'un robot de type quelconque, d'une table de coordonnées de type quelconque, ou d'une combinaison des deux systèmes.

10. Procédé selon les revendications 1 à 9, dans lequel le laser est un laser CO₂ ou un laser Nd:YAG.
